# EUROPEAN PATENT SPECIFICATION

(11) **EP 3 775 406 B1**
(45) Date of publication and mention of the grant of the patent: **04.05.2022**
(21) Application number: 19724890.9
(22) Date of filing: 12.04.2019
(51) Int. Cl.: E02F 3/96, B65G 67/60, B65G 69/08, B65D 88/66

(54) **VIBRATOR LOADER**
SCHWINGLADER
CHARGEUR À VIBREUR

(30) Priority: 13.04.2018 GB 201806098
(43) Date of publication of application: 17.02.2021
(73) Proprietor: BEMROSE, Darren, Grimsby Lincolnshire DN34 5DR (GB)
(72) Inventor: BEMROSE, Darren, Grimsby Lincolnshire DN34 5DR (GB)
(74) Representative: Schlich, George
(86) International application number: PCT/GB2019/051066
(87) International publication number: WO 2019/197849

(56) References cited:
- WO-A1-2004/092043
- JP-U- H04 119 847
- US-A- 3 866 693
- US-A- 4 026 604
- US-A1- 2004 244 234

## Description

The present invention relates to a vibrator loader, that is to say a loader and particularly though not exclusively 360° loader, adapted with a vibrator for facilitating loading. A working machine provided with a bucket and a vibrating chisel is for example disclosed in document JP H04 119847 U.

The unloading of certain cargoes is made quicker and easier by deploying a 360° loader in a cargo vessel's hold, not so much for the actual unloading as moving the cargo to an unloader such as a crane grab.

A problem with such unloading is that cargo can become held up in and around various structures in the hold, such as ladders. Releasing this part of the cargo is possible with a second machine lowered into the hold and equipped with a vibrator. This is generally inconvenient in slowing unloading, which adds to cost. Further such operations are in the nature of jury rig operations, in that for instance a large baulk of timber can be necessary between the vibrator and the hold structures. This is far from ideal.

A further difficulty is that a loader is adapted to work only a single implement, a bucket for instance.

For consistency in this specification:
"boom" is used to designate a member pivoted directly to a loader's body; and
"arm" is used to designate the member pivoted at one end to the boom and normally carrying a loading bucket at the other end.

The object of the present invention is to provide an improved loader for both moving the cargo for unloading and, adapted with a vibrator, for dislodging held up cargo.

According to the invention there is provided a loader for unloading a vessel, the loader comprising:
- a boom,
- an arm pivoted to the boom,
- a bucket normally carried by the arm,
- a telescopic vibrator carrier attached to the arm, and
- at least one vibrator carried by the carrier and adapted to reach beyond the bucket, the vibrator having at least one laterally driven finger for dislodging a load from the vessel.

According to the invention, a telescopic carrier for the vibrator will be provided on the arm, for withdrawing the vibrator when the bucket is to be used and extending the vibrator for its use. Whilst alternatives can be envisaged for a purpose built machine, where an existing loader is modified the telescopic carrier is preferably mounted to one side of the arm, out of the way of a ram and linkage for working the bucket.

The vibrator will be provided with a vibratingly driven finger extending distally of the vibrator and its carrier. It can be driven longitudinally, but this is likely to result in damaging contact with the hold walls. According to the invention, it is driven laterally for lateral contact with the hold structures.

Further, the vibrator is preferably resiliently mounted in the carrier, to ease required accuracy in placement. In the preferred embodiment two carriers are provided whereby for instance both sides of a hollow structure having hung up cargo can be vibrated.

To help understanding of the invention, a specific embodiment thereof will now be described by way of example and with reference to the accompanying drawings, in which:
Figure 1 shows a 360° loader working in a hold, piling cargo for a crane grab;
Figure 2 shows a similar view of the loader adapted in accordance with the invention, i.e. having a vibrator for dislodging hung-up cargo;
Figure 3 is a similar view of the loader's arm on a larger scale, with the vibrator withdrawn, for use of the bucket;
Figure 4 is a similar view of the bucket tucked up and the vibrator extended;
Figure 5 is a front view, opposite from a loader operator's view, of the distal ends of the arm and vibrator telescope, with the vibrator extended beyond the bucket as in Figure 4; and

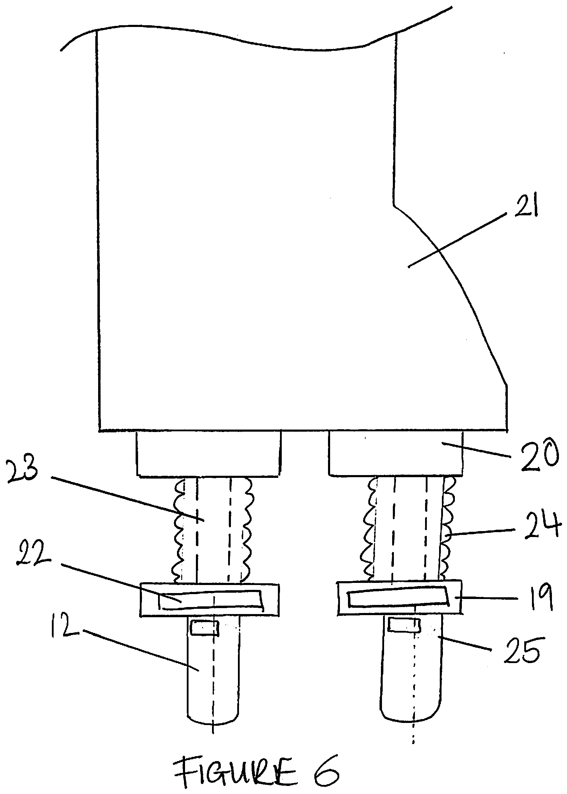

Figure 6 is a cross sectional view of the vibrators.

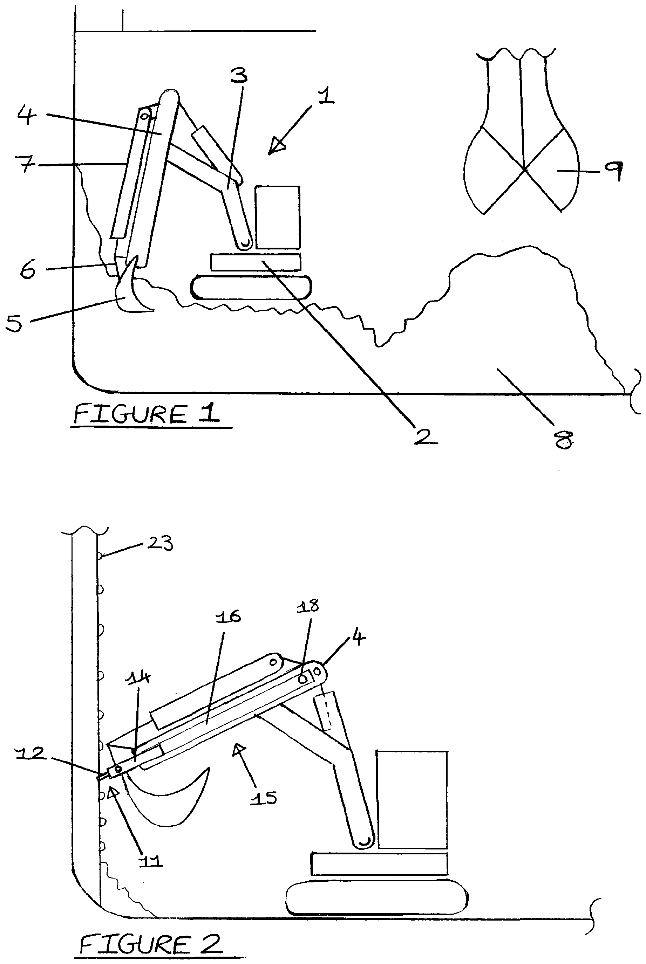

Referring to Figure 1 of the drawings, a 360° loader 1 has a body 2, to which is pivoted a boom 3, with an arm 4 pivoted at the end of the boom. A bucket 5 is pivoted to the distal end of the arm, via a linkage 6 and worked by a bucket ram 7. The loader is conventional in these respects. It is shown piling cargo 8 to be picked up by a crane grab 9.

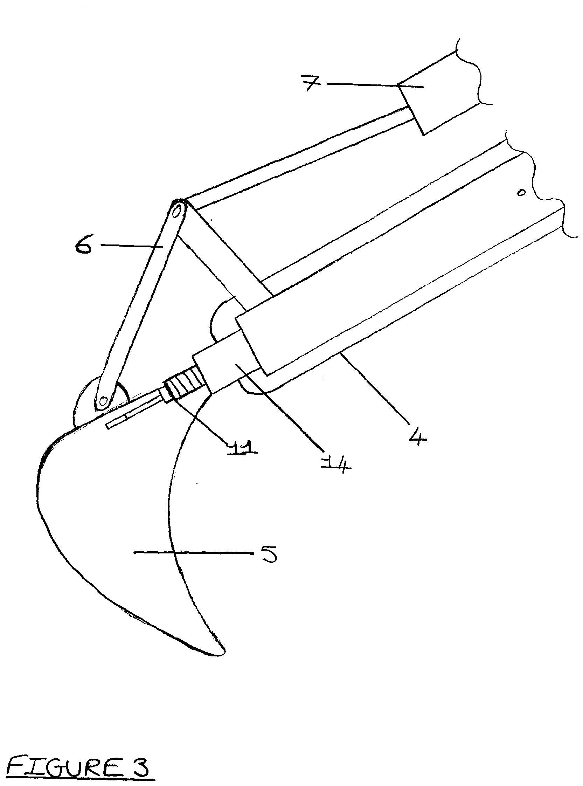

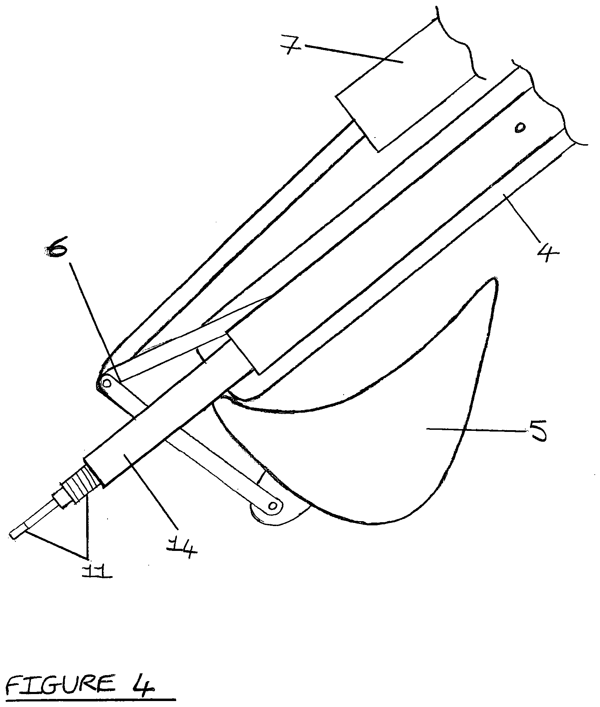

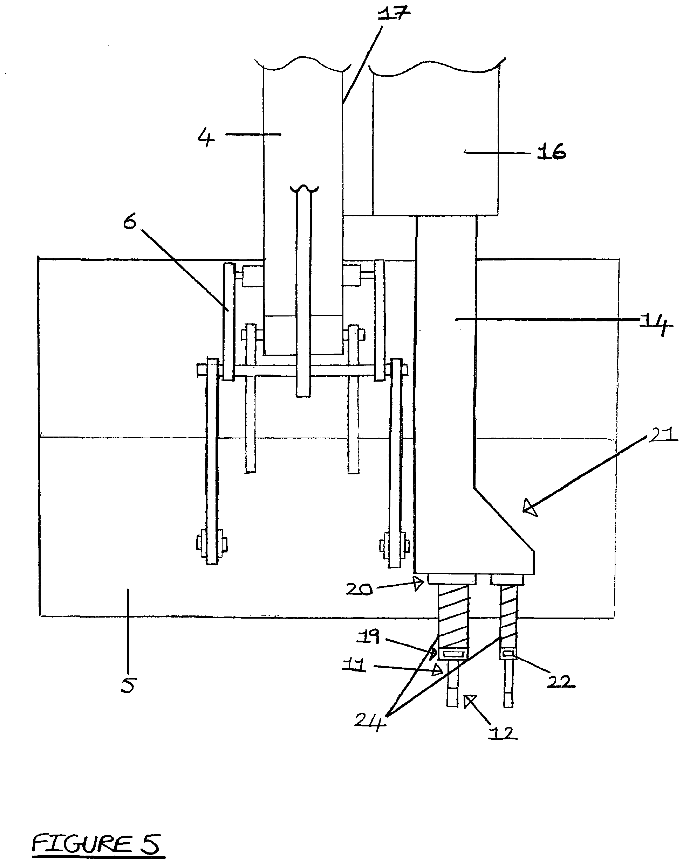

In accordance with the invention and as shown in Figures 2 to 5, a vibrator 11 is mounted on side of the arm, with a vibratory finger 12 generally parallel to the arm. In the embodiment shown, two vibrators are provided, with their vibratingly driveable fingers parallel. They are mounted at the distal end of an inner member 14 of a telescopic carrier 15. The inner member is telescopically arranged inside an outer member 16 of the carrier, which is fast with the side 17 of the arm. Internally, a telescopic ram for the inner member is arranged. It is not visible, but its proximal end attachment pin 18 is shown.

The vibrator has a first clamp 19 at the distal end of the vibrator, and a second clamp 20 at the proximal end. The inner member of the carrier has a wide head 21 for attachment of the first clamp. The first clamp houses a hydraulic motor 22 with an axial drive shaft. The first and second clamps are interconnected via a hydraulic hose 23 for passing pressurised oil to the motors, the hose being internal of a coil spring 24. The spring is clamped at its proximal end to the carrier, and to the vibrator at the distal end. It allows deflection of the vibrator(s) and protects the hydraulic hose.

The finger 12 has an eccentric 25, rotationally driven by the drive shaft, causing it to vibrate laterally in use. The vibrators are commercially available from: Wyco of 8635 Washington Avenue, Racine, WI 53406-3738 USA and will not be described in further detail.

For cargo moving in a hold, as shown in Figure 1, the telescopic inner member is withdrawn so that the bucket can be worked conventionally. For use of the vibrators, the telescopic member is extended past the bucket, which is tucked up, as shown in Figure 2. The vibratingly driven fingers can then be applied to hold structures such as a ladder 22 having hung up cargo.

A typical cargo is coal.

The invention is not intended to be restricted to the details of the above described embodiment. For instance, a single vibrator only is envisaged to be adequate in many instances.

## Claims

1. A loader (1) for unloading a vessel, comprising:
• a boom (3),
• an arm (4) pivoted to the boom,
• a bucket (5) normally carried by the arm,
• a telescopic vibrator carrier (15) attached to the arm and
• at least one vibrator (11) carried by the carrier and adapted to reach beyond the bucket, the vibrator having:
• at least one laterally driven finger (12) for dislodging a load from the vessel.

2. A loader as claimed in claim 1, wherein the carrier for the or each vibrator mounted to one side of the arm, to one side of a bucket ram and linkage.

3. A loader as claimed in claim 2, wherein the telescopic carrier is adapted and arranged for withdrawing the or each vibrator when the bucket is to be used, and to extend the or each vibrator for its use.

4. A loader as claimed in claim 2 or 3, wherein the telescopic carrier comprises an inner member and an outer member, with the inner member telescopically arranged within it, the or each vibrator being attached at the distal end of the inner member.

5. A loader as claimed in any preceding claim, wherein the or each vibrator has a longitudinally, vibratingly driveable finger, extending outwardly of the arm.

6. A loader as claimed in any preceding claim, wherein the or each vibrator has a laterally, vibratingly driveable finger, extending outwardly of the arm.

7. A loader as claimed in claim 6, wherein the or each vibrator comprises a hydraulic motor and an eccentric rotationally driveable by the motor within the finger for its lateral vibration.

8. A loader as claimed in any preceding claim, wherein the or each vibrator is attached to the carrier via a respective spring allowing the vibrator(s) to deflect on contact with a vessel wall.

9. A loader as claimed in claim 8, wherein the spring is a coil spring clamped by a first clamp to carrier and clamped by a second clamp to its vibrator.

10. A loader as claimed claim 9 as appendant to claim 7, wherein a hydraulic hose for the motor is housed with the spring for its protection.

## Patentansprüche

1. Lader (1) zum Entladen eines Schiffs, umfassend:
• einen Ausleger (3),
• einen am Ausleger schwenkbar gelagerten Arm (4),
• eine normalerweise von dem Arm getragene Schaufel (5),
• einen am Arm angebrachten Teleskop-Rüttelträger (15) und
• mindestens einen Rüttler (11), der von dem Träger getragen wird und so angepasst ist, dass er über die Schaufel hinausreicht, wobei der Rüttler Folgendes aufweist:
• mindestens einen seitlich angetriebenen Finger (12) zum Entfernen einer Last von dem Schiff.

2. Lader nach Anspruch 1, wobei der Träger für den oder jeden Rüttler an einer Seite des Arms, an einer Seite eines Schaufelstößels und -gestänges montiert ist.

3. Lader nach Anspruch 2, wobei der Teleskopträger angepasst und angeordnet ist, um den oder jeden Rüttler zurückzuziehen, wenn die Schaufel verwendet werden soll, und um den oder jeden Rüttler für seinen Gebrauch auszufahren.

4. Lader nach Anspruch 2 oder 3, wobei der Teleskopträger ein inneres Element und ein äußeres Element umfasst, wobei das innere Element teleskopisch darin angeordnet ist, wobei der oder jeder Rüttler am distalen Ende des inneren Elements angebracht ist.

5. Lader nach einem der vorhergehenden Ansprüche, wobei der oder jeder Rüttler einen in Längsrichtung vibrierend antreibbaren Finger aufweist, der sich von dem Arm nach außen erstreckt.

6. Lader nach einem der vorhergehenden Ansprüche, wobei der oder jeder Rüttler einen seitlich vibrierend antreibbaren Finger aufweist, der sich von dem Arm nach außen erstreckt.

7. Lader nach Anspruch 6, wobei der oder jeder Rüttler einen hydraulischen Motor und einen Exzenter umfasst, der durch den Motor innerhalb des Fingers für seine seitliche Vibration drehend antreibbar ist.

8. Lader nach einem der vorhergehenden Ansprüche, wobei der oder jeder Rüttler an dem Träger über eine jeweilige Feder angebracht ist, die es dem/den Rüttler(n) ermöglicht, bei Kontakt mit einer Schiffswand auszulenken.

9. Lader nach Anspruch 8, wobei die Feder eine Schraubenfeder ist, die durch eine erste Klemme an den Träger geklemmt ist und durch eine zweite Klemme an seinen Rüttler geklemmt ist.

10. Lader nach Anspruch 9 in Abhängigkeit von Anspruch 7, wobei ein Hydraulikschlauch für den Motor zu seinem Schutz in der Feder untergebracht ist.

## Revendications

1. Chargeuse (1) destinée à décharger un navire, comprenant :
• une flèche (3),
• un bras (4) pivotant par rapport à la flèche,
• un godet (5) normalement supporté par le bras,
• un support télescopique (15) de vibrateur fixé au bras, et
• au moins un vibrateur (11) supporté par le support et conçu pour s'étendre au-delà du godet, le vibrateur comportant :
• au moins un doigt entraîné latéralement (12) destiné à détacher une charge du navire.

2. Chargeuse selon la revendication 1, dans laquelle le support destiné au ou à chaque vibrateur est monté sur un côté du bras, sur un côté d'un vérin et d'une liaison de godet.

3. Chargeuse selon la revendication 2, dans laquelle le support télescopique est adapté et conçu pour un retrait du ou de chaque vibrateur lorsque le godet doit être utilisé, et pour étendre le ou chaque vibrateur lors de son utilisation.

4. Chargeuse selon la revendication 2 ou 3, dans laquelle le support télescopique comprend un élément intérieur et un élément extérieur, l'élément intérieur étant disposé de manière télescopique à l'intérieur de ce dernier, le ou chaque vibrateur étant fixé à l'extrémité distale de l'élément intérieur.

5. Chargeuse selon l'une quelconque des revendications précédentes, dans laquelle le ou chaque vibrateur comporte un doigt pouvant être entraîné de manière longitudinale et vibrante, s'étendant vers l'extérieur du bras.

6. Chargeuse selon l'une quelconque des revendications précédentes, dans laquelle le ou chaque vibrateur comporte un doigt pouvant être entraîné de manière latérale et vibrante, s'étendant vers l'extérieur du bras.

7. Chargeuse selon la revendication 6, dans laquelle le ou chaque vibrateur comprend un moteur hydraulique et un excentrique pouvant être entraîné en rotation par le moteur à l'intérieur du doigt par rapport à sa vibration latérale.

8. Chargeuse selon l'une quelconque des revendications précédentes, dans laquelle le ou chaque vibrateur est fixé au support par le biais d'un ressort respectif permettant au ou aux vibrateur(s) de fléchir lors d'un contact avec une paroi de navire.

9. Chargeuse selon la revendication 8, dans laquelle le ressort est un ressort hélicoïdal bridé par une première bride sur le support et bridé par une seconde bride sur son vibrateur.

10. Chargeuse selon la revendication 9 lorsqu'elle dépend de la revendication 7, dans laquelle un tuyau hydraulique destiné au moteur est logé dans le ressort pour sa protection.
